(19) Europäisches Patentamt
European Patent Office
Office européen des brevets

(11) Publication number: 0 126 564 B1

# (12) EUROPEAN PATENT SPECIFICATION

(45) Date of publication of patent specification: 28.12.88

(51) Int. Cl.[4]: G 21 K 4/00

(21) Application number: 84302896.0

(22) Date of filing: 30.04.84

## (54) Method for reproducing a radiation image.

(30) Priority: 30.04.83 JP 77220/83

(43) Date of publication of application: 28.11.84 Bulletin 84/48

(45) Publication of the grant of the patent: 28.12.88 Bulletin 88/52

(84) Designated Contracting States: DE FR GB

(56) References cited:
DE-A-2 347 923
FR-A-1 149 833
FR-A-2 037 840
FR-A-2 145 566
US-A-2 882 413
US-A-3 344 276
US-A-4 239 968

**The file contains technical information submitted after the application was filed and not included in this specification**

(73) Proprietor: KONISHIROKU PHOTO INDUSTRY CO. LTD.
No. 26-2, Nishishinjuku 1-chome Shinjuku-ku
Tokyo 160 (JP)

(72) Inventor: Tsuchino, Hisanori
2-5-19, Owadacho
Hachioji-shi Tokyo (JP)
Inventor: Teshima, Manami
1-16-6, Kunitachi-shi
Tokyo (JP)
Inventor: Takeuchi, Hiroshi
1097-2-10-508, Tatemachi
Hachioji-shi Tokyo (JP)
Inventor: Shimada, Fumio
3-5-20, Kawasaki Hamuramachi
Nishitama-gun Tokyo (JP)

(74) Representative: Ellis-Jones, Patrick George Armine et al
J.A. KEMP & CO. 14 South Square Gray's Inn
London WC1R 5EU (GB)

EP 0 126 564 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of reproducing a radiation image stored on a radiation image storage panel by use of a stimulable phosphor, more especially a method which provides an image of high sharpness.

In the prior art, radiation images may be stored using silver salts. This is known as radiophotography. In recent years, particularly on account of the problem of exhaustion of silver resources on a global scale, it has been desired to store radiation images without recourse to a silver salt.

As a substitute, a method has been proposed in which radiation transmitted through a photographed object is absorbed in a phosphor, the phosphor is then excited to permit the radiation energy stored therein to be radiated as luminescence, and the luminescence is detected. For example, U.S. Patent 3,859,527 and Japanese Unexamined Patent Publication No. 12144/1980 propose a radiation image storage method in which a stimulable phosphor is used as the phosphor and the excitation radiation is visible light or IR-rays.

This storage method employs a panel having a stimulable phosphor layer formed on a support and obtains an image corresponding to the intensity of light by storing radiation energy corresponding to the intensity of the radiation transmitted through the photographed object in the stimulable phosphor layer of the panel and scans the stimulable phosphor layer with a stimulable excitation ray (hereinafter referred to as the "excitation ray") to reproduce the stored radiation energy as light. The final images may be reproduced as a hard copy or reproduced on CRT.

Sharpness of image in the prior art radiophotography is determined by the spreading of momentary emission (emission on irradiation of radiation) of the phosphor in the screen. In contrast, sharpness of image in the radiation image storage method utilizing a stimulable phosphor as described above is not determined by spreading of the stimulated emission of the phosphor in the radiation image storage panel as in the case of radiophotography, but is rather determined by the spreading of the excitation ray within the panel. According to the radiation image information stored in the radiation image storage method, the radiation image information stored in the radiation image storage panel is taken out sequentially, and therefore the emission stimulated by the excitation ray at a time ($t_i$) is desirably collected wholly and recorded as the output from an image element ($x_i$, $y_i$) on the panel on which the excitation ray is irradiated. If the excitation ray is spread, for example by scattering within the panel to excite the phosphor outside the irradiated image element, an output from a wider region than the image element is recorded as the output of the image element ($x_i$, $y_i$). Accordingly, if the emission stimulated by the excitation ray irradiated at a time ($t_i$) is only the emission from the image element ($x_i$, $y_i$) on the panel on which the excitation ray is directly irradiated, the sharpness of image is not influenced by the emission regardless of the extent of spreading thereof.

The radiation image storage panel used in the radiation image storage method as described above has at least a phosphor layer comprising a stimulable phosphor. The phosphor layer is generally provided on an appropriate substrate. Furthermore, as a usual practice, a protective layer for physically or chemically protecting the phosphor layer is provided on the layer surface on the side opposite to the surface in contact with the substrate. In such a radiation image storage panel of the prior art, the mean free path of the excitation ray within the phosphor layer is elongated by scattering of the excitation ray, and the excitation ray is spread by a relatively great extent within the phosphor layer. This disadvantageously deteriorates the sharpness of image, and improvement of this drawback is strongly desired.

To improve the sharpness it has been proposed to incorporate white powder in the phosphor layer of the radiation image storage panel, as disclosed in Japanese Unexamined Patent Publication No. 146447/1980, and to colour the radiation image storage panel so that the mean reflectance in the excited wavelength region of the stimulable phosphor is smaller than the mean reflectance in the stimulation emission wavelength region of the stimulable phosphor as disclosed in Japanese Unexamined Patent Publication No. 163500/1980. However, these methods are not satisfactory, because improvement of sharpness necessarily results in a marked lowering of sensitivity.

DE—A—2,347,923 discloses an image intensifying screen comprising a plurality of holes filled with a phosphor material.

US—A—4,239,968 discloses a method for reproducing a radiation image wherein a phosphor is excited with an excitation ray.

The present invention seeks to provide a method for reproducing a radiation image stored on a radiation image storage panel capable of providing images high sharpness.

Accordingly the present invnetion provides a method of reproducing a radiation image stored on a radiation image storage panel having a stimulable phosphor layer, wherein the stimulable phosphor is contained in discrete cells partitioned by partitioning wall members, which comprises stimulating the phosphor with an excitation ray which is scanned over the surface of the panel and detecting the stimulated phosphor emission in synchronization with the scanning of the excitation ray.

The present invention is now described with reference to the accompanying drawings, in which:

Fig. 1 is a partial sectional view of an embodiment of the radiation image storage panel;

Fig. 2 is a plan view of Fig. 1;

Fig. 3 and 13 are plan views of other embodiments;

Fig. 4(a) is a chart showing the characteristics of the radiation image storage panel of the prior art and

Fig. 4(b) is a chart showing the characteristics of the radiation image storage panel used in the present invention;

Fig. 5 through 7 are sectional views showing other embodiments;

Fig. 8 is a schematic chart illustrating the radiation image information reproducing method of the present invention;

Fig. 9 is a sectional view of a mother mould used in the preparation of the substrate for the radiation image storage panel shown in Fig. 3;

Fig. 10 is a sectional view of the substrate prepared by use of a photosensitive resin;

Fig. 11 is a sectional view of the substrate having a reflection layer provided thereon; and

Fig. 12 is a sectional view of the substrate prepared by use of a metallic plate.

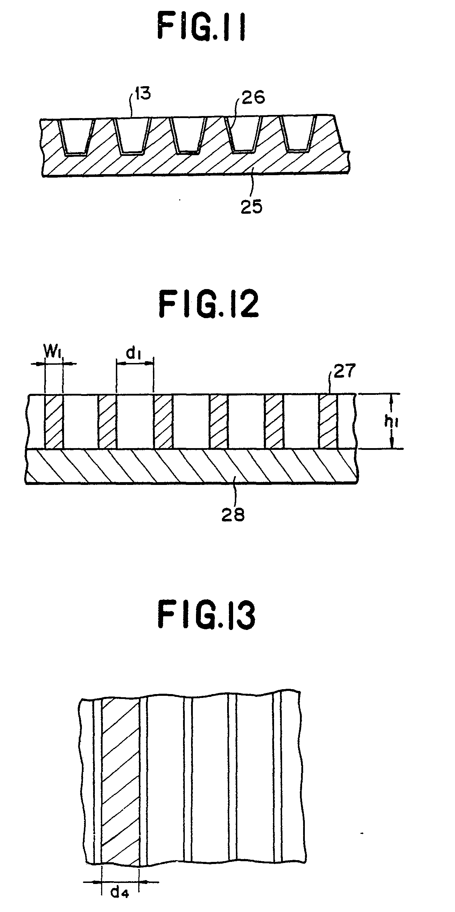

Fig. 1 and Fig. 2 show an embodiment of the radiation image storage panel. The panel comprises a phosphor layer substrate 10 constituted of a bottom portion 11 and a partitioning member 12. The bottom portion 11 is not essentially required, but it is provided for the purpose of avoiding deformation of the partitioning member 12. Therefore, if the partitioning member 12 is sufficiently strong, no bottom portion 11 is necessary. The partitioning members form a structure as shown in Fig. 2, in which large number of cells 13 are formed. The form of the cells 13 is not limited to that as shown in Fig. 2, but may be circular as shown in Fig. 3 or any other shape such as hexagonal, rectangular or elliptical. It may also be groove as shown in Fig. 13. The arrangement of cells 13 is also not limited to that as shown in Fig. 2, but may also be as shown in Fig. 3. Any other desired arrangement may be used, provided that divided cells are obtained. For prevention of moire, the shapes of cells and/or arrangement of the cells should preferably be random. Each of the cells 13 is filled with the stimulable phosphor 14 to form a phosphor layer. The partitioning member 12 is preferably absorptive or reflective of the excitation ray, more preferably reflective, to improve the sensitivity. The bottom portion may also be transmissive of the excitation ray. The partitioning member 12 is preferably made of a material which absorbs or reflects the excitation ray or is made by forming a layer which absorbs or reflects the excitation ray by coating or vapor deposition.

The substrate 10 may be transmissive, absorptive or reflective of the emission from the stimulable phosphor, but it is preferably reflective to improve luminance. To make the substrate absorptive or reflective of the emission, it may be made of material absorptive or reflective of emission, or be made by forming a layer capable of absorbing or reflecting emission by coating or vapor deposition.

In the radiation image storage panel having such a construction, the excitation ray for releasing the radiation energy stored in the stimulable phosphor 14 as stimulated emission proceeds in all directions due to, for example, scattering and the excitation ray directed towards the partitioning member 12 is absorbed (when the partitioning member is absorptive of the excitation ray) or reflected (when the partitioning member is reflective of the excitation ray). The excitation ray directed towards the bottom portion is absorbed (when the bottom portion material is absorptive of the excitation ray), reflected (when the bottom portion material is reflective of the excitation ray) or transmitted (when the bottom portion material is transmissive of the excitation ray).

Accordingly, as shown in Fig. 4, the spreading of the excitation ray irradiated on one point on the radiation image storage panel is limited to give a radiation image with good sharpness.

The dimensions of the portion filled with a stimulable phosphor may be determined approximately to improve the image quality. The proportion of the surface area ratio of cell area of the cell relative to the surface area of the tops of the partitioning wall members is preferably at least 50%. It is preferred that the top surface of the cells is not more than 600 μm across. More specifically, as shown in the Figures, $d_l$, $d_2$, $d_3$ and $d_4$ are generally from 10 μm to 600 μm, and the depth $h_l$ is generally from 30 μm to 1000 μm, to provide improved performance over the radiation image storage panel of the prior art. The thickness of the partitioning wall $W_1$ is preferably as thin as possible but in general is from 10 to 300 μm in view of its method of preparation.

In the radiation image storage panel the stimulable phosphor may be deposited higher than the partitioning wall member to give a uniform appearance as shown in Fig. 5, provided that the height $h_2$ from the top of the partitioning wall is small (for example, $h_2$ is not more than $0.3 \times h'_2$ wherein $h_2'$ is the height from the bottom portion). Improved image quality similar, but slightly inferior, to the case as shown in Fig. 1 can be obtained. When the surface of the stimulable phosphor is lower than the upper face of the partitioning wall as shown in Fig. 6, improved image quality can also be obtained as in the case of Fig. 1.

In the case of a panel having a structure as shown in Fig. 7, wherein a partitioning wall member 12 is provided on a stimulable phosphor layer with a uniform height of $h_3$ and the respective cells are filled with the stimulable phosphor, improved image quality can be obtained similarly as in the case of Fig. 1 (for example, $h_3$ is not more than $0.9 \times h_3'$ wherein $h_3'$ is the height of the partitioning wall member 12). In this case the partitioning wall member 12 is separate from the bottom portion 11, which is different from the panel shown in Fig. 1.

Various materials may be used as the substrate, for example polymeric materials, glass, wool, cotton, paper and metals. The substrate 10 need not be made of one material, but may be made of two or more materials. These substrates 10 may also have a subbing layer which adheres to the phosphor on the face contacted with the phosphor within the cells, to hold more firmly the phosphor layer. When the substrate, in particular the bottom portion, is transmissive of the excitation ray, it is possible to irradiate the radiation

image storage panel with the excitation ray from the face on the opposite side to the face on which the phosphor layer is provided.

The materials used for the partitioning wall member may be, for example, polymeric materials, glass, ceramic and metals. When the material is transparent, pigments or dyes to make the materials opaque to the excitation ray or emitted light, may be added to the material or opaque coated films may be provided on the inner walls of cells by, for example, vapor deposition. The inner walls may be subjected to mirror finishing by vapor deposition or chemical means to form reflective surfaces. Thus, there is no particular restriction with respect to the material for the partitioning wall member; only the strength of the partitioning wall member during filling of the cells with the stimulable phosphor needs be taken into consideration.

The stimulable phosphor is a phosphor which exhibits stimulated emission by irradiation of an excitation ray after irradiation of radiation as previously mentioned. It is preferably a phosphor exhibiting stimulated emission by the excitation ray with a wavelength of from 500 to 800 nm.

Examples of the stimulable phosphor are:

$BaSO_4$: Ax wherein A is at least one of Dy, Tb and Tm, and $0.001 \leq x < 1$ mole % as disclosed in Japanese Unexamined Patent Publication No. 80487/1973;

$MgSO_4$: Ax wherein A is at least one of Ho and Dy, and $0.001 \leq x \leq 1$ mole % as disclosed in Japanese Unexamined Patent Publication No. 80488/1973;

$SrSO_4$: Ax wherein A is at least one of Tm, Tb and Dy, and $0.001 \leq x < 1$ mole % as disclosed in Japanese Unexamined Patent Publication No. 80489/1973;

a phosphor in which at least one of Mn, Dy and Tb is added to $Na_2SO_4$, $CaSO_4$, $BaSO_4$ and similar compounds as disclosed in Japanese Unexamined Patent Publication No. 29889/1976;

BeO, LiF, $Mg_2SO_4$ and $CAF_2$ as disclosed in Japanese Unexamined Patent Publication No. 30487/1977;

$Li_2B_4O_7$:Cu, Ag and similar compounds disclosed in Japanese Unexamined Patent Publication No. 39277/1978;

$Li_2O.(B_2O_2)x$:Cu wherein $2 < x \leq 3$ and $Li_2O.(B_2O_2)x$:Cu,Ag wherein $2 < x \leq 3$ as disclosed in Japanese Unexamined Patent Publication No. 47883/1979;

SrS:Ce,Sm,SrS:Eu,Sm,$La_2O_2S$:Eu,Sm and (Zn,Cd)S:Mn,X wherein X is a halogen as disclosed in U.S. Patent 3,859,527;

ZnS:Cu,P6 phosphor, a barium aluminate phosphor of formula $BaO \cdot xAl_2O_3$:Eu wherein $0.8 \leq x \leq 10$ and an alkaline earth metal silicate type phosphor of formula $M^{II}O \cdot xSiO_2$:A wherein $M^{II}$ is Mg, Ca, Sr, Zm, Cd or Ba, A is at least one of Ce, Tb, Eu, Tm, Pb, Tl, Bi and Mn, and $0.5 \leq x \leq 2.5$, as disclosed in Japanese Unexamined Patent Publication No. 12142/1980;

an alkaline earth fluorohalide phosphor of formula: $(Ba_{1-x-y}Mg_xCa_y)FX:eEu^{2+}$ wherein X is at least one of Br and Cl, and $0 < x+y \leq 0.6$, $xy \neq 0$ and $10^{-6} \leq e \leq 5 \times 10^{-2}$, respectively as disclosed in Japanese Unexamined Patent Publication No. 12143/1980;

LnOX:xA wherein Ln is at least one of La, Y, Gd and Lu, X is Cl and/or Br, A is Ce and/or Tb, and $0 < x < 0.1$ as disclosed in Japanese Unexamined Patent Publication No. 12144/1980;

$(Ba_{1-x}M^{II}x)FX:yA$ wherein $M^{II}$ is at least one of Ma, Ca, Sr, Zn and Cd, X is at least one of Cl, Br and I, A is at lest one of Eu, Tb, Ce, Tm, Dy, Pr, Ho, Nd, Yb and Er, $0 \leq x \leq 0.6$ and $0 \leq y \leq 0.6$ as disclosed in Japanese Unexamined Patent Publication No. 12145/1980;

BaFX,xCe,yA wherein X is at least one of Cl, Br and I, A is at least one of In, Tl, Gd, Sm and Zr, $0 < x \leq 2 \times 10^{-1}$ and $0 < y \leq 5 \times 10^{-2}$, as disclosed in Japanese Unexamined Patent Publication No. 84389/1980;

a phosphor of a divalent metal fluorohalide activated with a rare earth element of the formula: $M^{II}FX:xA:yLn$ wherein $M^{II}$ is at least one of Ba, Ca, Sr, Mg, Zn and Cd, A is at least one of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$, Ln is at least one of Eu, Tb, Ce, Tm, Dy, Pr, Ho, Nd, Yb, Er, Sm and Gd, X is at least one of Cl, Br and I, $5 \times 10^{-5} \leq x \leq 0.5$ and $0 < y \leq 0.2$ as disclosed in Japanese Unexamined Patent Publication No. 160078/1980;

ZnS:A, CdS:A, (Zn, Cd)S:A, ZnS:A,X or CdS:A,X wherein a is Cu, Ag, Au or Mn and X is a halogen;

a phosphor of formula [I] or [II] as disclosed in Japanese Unexamined Patent Publication No. 148285/1982:

| | |
|---|---|
| Formula [I] | $xM_3\ (PO_4)_2.NX_2:yA$ |
| Formula [II] | $M_3\ (PO_4)_2:yA$ |

wherein M and N each is at least one of Mg, Ca, Sr, Ba, Zn and Cd, X is at least one of F, Cl, Br and I, A is at least one of Eu, Tb, Ce, Tm, Dy, Pr, He, Nd, Yb, Er, Sb, Tl, Mn and Sn, $0 < x \leq 6$ and $0 \leq y \leq 1$; and

a phosphor of formula [III] or [IV]:

| | |
|---|---|
| Formula [III] | $nReX_3.mAX_2':xEu$ |
| Formula [IV] | $nReX_3.mAX_2':xEu.ySm$ |

wherein Re is at least one of La, Gd, Y and Lu, A is at least one alkaline earth metal, Ba, Sr and Ca, X and X′ is each at least one of F, Cl and Br, $1 \times 10^{-4} < x < 3 \times 10^{-1}$, $1 \times 10^{-4} < y < 1 \times 10^{-1}$, and $1 \times 10^{-3} < n/m < y \times 10^{-1}$.

Any phosphor may of course be used provided that it can exhibit stimulated emission when irradiated with excitation ray after it is irradiated.

The stimulable phosphor to be employed has a mean grain size which is suitably from 0.1 to 100 µm in view of the sensitivity of the radiation image storage panel and graininess of the phosphor. More preferably, a phosphor with a mean grain size of 1 to 30 µm is used. It is not preferred to use a grain size greater than the size of the cells.

The stimulable phosphor is generally dispersed in a suitable binder and filled into the cells. Examples of binders are those conventionally used for layer formation, including proteins such as gelatin, polysaccharides such as dextran, gum arabic, polyvinyl butyral, polyvinyl acetate, nitrocellulose, ethyl cellulose, vinylidene chloride-vinyl chloride copolymer, polymethyl methacrylate, vinyl chloride-vinyl acetate copolymer, polyurethane, cellulose acetate butyrate and polyvinyl alcohol. More preferably, a polyvinyl acetal resin of the following formula is used:

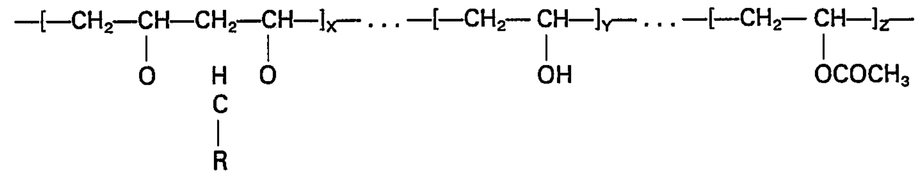

wherein R is a lower alkyl group, especially having from 1 to 8, advantageously from 1 to 4, carbon atoms; and X, Y and Z are integers which satisfy the formulae:

$$0.40<X/(X+Y+Z)<0.79$$
$$0.20<Y/(X+Y+Z)<0.54$$
$$0<Z/(X+Y+Z)<0.20$$
$$100<X+Y+Z<3000$$

The polyvinyl acetal resin is a copolymer containing units derived from vinyl acetal, vinyl aclohol and vinyl acetate and can be prepared by the reaction between polyvinyl alcohol and an aldehyde. For reasons of solubility and adhesion, it is preferred that the composition of the polyvinyl acetal resin is within the range mentioned above.

The preferred degree of polymerization of the polyvinyl acetal resin is from 100 to 3000, more preferably from 150 to 2000 in view of the softening point. A mixture of the polyvinyl acetal resin and one or more resins which have good compatibility therewith may be used. These resins include, for example, a phenol resin, a melamine resin, an epoxy resin, a maleic resin, an alkyd resin, a sulfurylamide resin and a nitrocellulose. It is preferred that the amount of the polyvinyl acetal resin is more than 40% by weight, more preferably, more than 60% by weight. The binder may be employed in an amount from 0.01 to 1 part by weight based on 1 part by weight of the stimulable phosphor. However, in view of the sensitivity and sharpness characteristics of the radiation image storage panel, the binder should preferably be used in an amount which is as small as possible, more preferably from 0.03 to 0.2 parts by weight when taking the easiness in coating into account.

A protective film is generally provided on the surface exposed outside of the phosphor layer (the surface not shielded by the bottom portion of the phosphor layer substrate) for protecting physically and chemically the phosphor layer. The protective film may be formed by directly coating on the phosphor layer a protective film coating solution, or alternatively a protective film may be separately formed and adhered to the phosphor layer. The protective film material may be a conventional material such as nitrocellulose, ethyl cellulose, cellulose acetate and a polyester such as, for example, a polyethyleneterephthalate.

When the protective film is to be able to transmit the stimulated emission and excitation ray from the protective film side, it may be a material which can transmit the excitation ray as described above.

The radiation image storage panel can give images having good sharpness when employed in the radiation image storage process as schematically illustrated in Fig. 8.

Fig. 8 shows a radiation generating device 16, an object to be photographed 17, a radiation image storage panel 18, an excitation ray source 19 for permitting the latent radiation image on the radiation image storage panel to be radiated as luminesence, a photoelectric transducer for detection of the photoelectricity radiated from the radiation image storage panel 20, an image reproducing device 21 for reproducing the photoelectric transducing signals detected at the photoelectric transducer 20, an image display device 22 for displaying images reproduced, and a filter 23 which cuts out the reflected light from the light source 19 and permits only the light radiated from the radiation image storage panel 18 to be transmitted therethrough. The photoelectric transducer 20 through the image display device 22 may be any desired system which can reproduce the optical information from the radiation image storage panel 18 as an image in some form, and they are not limited to those as described above.

To remove the reflected light from the light source, instead of using a filter it is also possible to use the

method as disclosed in Japanese Patent Application No. 124744/1982, wherein a delay in emission is utilized to separate the light.

As shown in Fig. 8, the radiation is transmitted through the object to be photographed 17 corresponding to the transmissivity at the respective portions, and the transmitted image (namely the image with strong and weak radiation) is incident on the radiation image storage panel 18. The incident transmitted image is absorbed by the phosphor layer in the radiation image storage panel 18, whereby electrons and/or positive holes in numbers in proportion to the radiation dosage absorbed within the phosphor layer are generated and stored at the trap level of the phosphor. In other words, a stimulable image (latent image) of the transmitted radiation image is formed.

Next, this latent image is excited with an excitation ray to effect visualization. Since the phosphor layer in the radiation image storage panel 18 is divided into a number of cells with a partitioning wall member, spreading of the excitation ray within the phosphor layer is suppressed during excitation of the above phosphor layer. Intensity of the luminescence radiated is in proportion to the number of electrons and/or positive holes stored, namely in proportion to the intensity of the radiation energy absorbed in the phosphor layer in the radiation image storage panel 18, and this optical signal is transduced into an electrical signal by a photoelectric transducer 20 such as a photomultiplier tube, and the electrical signal is reproduced as an image by means of the image reproducing device 21. The image is displayed by the image display device 22.

The substrate comprising the bottom portion and the partitioning members may be prepared by forming the structure with a mother mould (mould casting method) or by etching a substrate (etching method).

In the mould casting method, a large number of substrates can be prepared repeatedly at low cost and rapidly from one mother mould. The etching method, using, for example, a photographic process, can provide a structure of various shapes, and there is no great limitation on the substrate materials.

According to the mould casting method, a mother mould 24 is prepared as shown in Fig. 9 in a form connected with the phosphor layer substrate as shown in Fig. 1. This mother mould is prepared by forming grooves having a width $W_2$ and depth $h_4$ slightly greater than those of $W_1$ and $h_1$ shown in Fig. 1 with a diamond blade on the surface of a flat plate comprising a silicon crystal material. Then, a moulding material cast into the mother mould. This moulding material is preferably a material, such as a white silicon rubber mixed with titanium oxide as the pigment, which transmits substantially no excitation ray through the partitioning wall after finishing, and which can be moulded with good flowability, and has excellent mould release properties and small shrinkage. After the moulding material has solidified, it is released from the mother mould to obtain a phosphor layer substrate as shown in Fig. 1. By filling the respective cells on this substrate with a phosphor, the radiation image storage panel can be prepared.

According to the etching method, when, for example, a photosensitive plate is used, a mask which has an island-like pattern of opaque portions to light is closely contacted to the surface of a nylon photosensitive resin (e.g. Printite, produced by Toyo Boseki Co., Ltd.) and irradiated with UV-rays having a wavelength within the photosensitive wavelength region of 250 to 400 nm. After light exposure, the photosensitive resin is developed. By this development, the non-exposed portions are removed to form the phosphor layer substrate 25 as shown in Fig. 10. By filling the cells framed by this substrate 25 with a phosphor, the radiation image storage panel can be prepared. Since the photosensitive resins are generally transparent, a light-absorbing material or a light-reflective material 26 is provided on the inner surface of the partitioning walls of the cells by coating or vapor deposition as shown in Fig. 11.

A preparation method employing etching of a metal plate may also be used. First, on both surfaces of, for example, a nickel plate, a photosensitive resin AZ-1350, commercially available from Sippley Co., is evenly coated. A mask having an island-like pattern of the light transmitting portion is then closely contacted to both surfaces of the nickel plate so that the patterns on both surfaces correspond to each other, and exposed to UV-rays. After exposure, the photosensitive resin is developed, whereby the exposed portions of the above photosensitive resins are removed. Subsequently, after the nickel plate is baked at 120°C for 30 minutes, the nickel plate is etched with an acid to form a partitioning wall member 27 as shown in Fig. 12. The partitioning wall member 27 is adhered to the bottom portion of, for example, polyethylene terephthalate 28, to form a phosphor layer substrate. By filling the cells with a phosphor, the radiation image storage panel is prepared.

The radiation image storage panel, wherein the phosphor layer is divided into a number of parts by partitioning wall members and the excitation ray is suppressed from spreading within the phosphor layers, can give images of markedly improved sharpness, and therefore it is of very high commercial value.

This invention is further illustrated by referring to the following Examples.

Example 1

On the surface of a nylon photosensitive resin (Printite, produced by Toyo Boseki Co., Ltd.) was provided in close contact a mask having an island-like pattern of a non-transmissive portion After exposure to UV-rays for 1 minute, the photosensitive resin was developed with water to prepare a phosphor layer substrate as shown in Fig. 10. The cells on this substrate had dimensions of $d_1=d_2=100$ µm, and $h_1=200$ µm and a thickness of the partitioning wall of $W_1=40$ µm and $W_3=70$ µm. An aluminium layer with a

reflectance of 80% was deposited on the inner walls of the cells by vapor deposition (under vacuum of $2 \times 10^{-5}$ Torr under heating).

8 parts by weight of phosphor of formula BaFBr:Eu with a mean grain size of 2 µm and 1 part by weight of a polyvinyl butyral (binder) were mixed and dispersed in a solvent (cyclohexanone) to prepare a coating solution. This coating solution was applied evenly on the above phosphor layer substrate horizontally placed to fill the respective cells with the phosphor, and the coated substrate was left to stand overnight to prepare a radiation image storage panel A.

Separately, the above procedure was repeated except that the above coating solution was applied to a dry film thickness of 200 µm on a polyethylene terephthalate film horizontally placed without using the above phosphor layer substrate to obtain a radiation image storage panel B for Control.

Separately, a panel B′ for control was obtained by the same procedure as the panel B except that as a substrate Printite having the same aluminium layer as the panel A thereon was used instead of the polyethylene terephthalate film.

The radiation image storage panels A, B and B′ were each irradiated with an X-ray of a tube voltage of 80 KVp, and scanned with a He-Ne laser beam of 150 µm ϕ to excite the phosphor. The emission from the phosphor was received by means of a light receiving means (photomultiplier tube) and converted into electrical signals, followed by reproduction into an image by means of a display device. The modulation transmission functions (MTF) for the respective images were examined. The results are shown in Table 1.

TABLE 1

| Panel | Spatial frequency (LP/mm) 0 | 0.5 | 1 | 1.5 | 2 | 2.5 | 3 | 4 |
|---|---|---|---|---|---|---|---|---|
| A | 100(%) | 95 | 90 | 81 | 72 | 66 | 58 | 26 |
| B | 100 | 90 | 61 | 43 | 30 | 24 | 17 | 6 |
| B′ | 100 | 86 | 56 | 38 | 25 | 20 | 12 | 3 |

As seen from Table 1, the radiation image storage panel A having the phosphor layer divided gives images of extremely high sharpness as compared with the radiation image storage panel B or B′ of the prior art.

Example 2

By etching a nickel plate and contacting the etched nickel plate to a polyethylene terephthalate film, a phosphor layer substrate as shown in Fig. 12 was prepared. The cells of this substrate had dimensions of $d_1 = d_2 = 120$ µm, $h_1 = 190$ µm and a thickness of the partitioning wall at its minimum of 35 µm. Subsequently, a coating solution was prepared in the same manner as in Example 1 by use of a phosphor of formula $0.1YF_3 \cdot 0.9BaFBr:Eu$ in place of the BaFBr:Eu phosphor of Example 1, to prepare a radiation image storage panel C.

The above procedure was repeated except that the coating solution was applied to a dry film thickness of 190 µm on a polyethylene terephthalate film horizontally placed without using the above phosphor layer substrate to obtain a radiation image storage panel D for Control. MTF values of the images obtained by storage the radiation images similarly as in Example 1 are shown in Table 2 below.

TABLE 2

| Panel | Spatial frequency (LP/mm) 0 | 0.5 | 1 | 1.5 | 2 | 2.5 | 3 | 4 |
|---|---|---|---|---|---|---|---|---|
| C | 100(%) | 96 | 92 | 84 | 75 | 67 | 60 | 30 |
| D | 100 | 92 | 63 | 41 | 30 | 26 | 18 | 7 |

As seen from Table 2, the radiation image storage panel C having the phosphor layer divided gives images of extremely high sharpness as compared with the radiation image storage panel D of the prior art.

**Claims**

1. A method of reproducing a radiation image stored on a radiation image storage panel having a stimulable phosphor layer, wherein the stimulable phosphor is contained in discrete cells partitioned by partitioning wall members, which comprises stimulating the phosphor with an excitation ray which is

scanned over the surface of the panel and detecting the stimulated phosphor emission in synchronization with the scanning of the excitation ray.

2. A method according to Claim 1, wherein said panel has a substrate comprising said partitioning wall members and a bottom portion member.

3. A method according to Claim 2, wherein said bottom portion member is connected to said partition wall members.

4. A method according to any one of Claims 1 to 3, wherein the proportion of the surface area of the cells relative to the surface area of the tops of the partitioning wall members is at least 50%.

5. A method according to any one of Claims 1 to 4, wherein the depth of the cells is from 30 µm to 1000 µm.

6. A method according to any one of Claims 1 to 5, wherein the thickness of the partitioning wall members is from 10 to 300 µm.

7. A method according to any one of Claims 1 to 6, wherein the surface of the top of the partitioning walls and the surface of the stimulable phosphor layer are on the same level.

8. A method according to any one of Claims 1 to 6, wherein, in the panel, the surface of the top of the partitioning wall is higher than the surface of the stimulable phosphor layer.

9. A method according to any one of Claims 1 to 8, wherein the surface of the phosphor layer is provided with a protective film.

10. A method according to any one of Claims 1 to 9, wherein the stimulable phosphor has a mean grain size of from 1 to 30 µm.

11. A method according to any one of Claims 1 to 10, wherein the partitioning wall members are absorptive or reflective to the excitation ray.

12. A method according to any one of Claims 1 to 11, wherein the stimulable phosphor is dispersed in a binder.

13. A method according to any one of Claims 1 to 12, wherein the cells are substantially square in cross-section.

14. A method according to any one of Claims 1 to 12, wherein the cells are substantially circular in cross-section.

15. A method according to any one of Claims 1 to 12, wherein the cells are substantially hexagonal in cross-section.

16. A method according to any one of Claims 1 to 15, wherein the wall members are made from a metal.

## Patentansprüche

1. Verfahren zur Wiedergabe eines Strahlungsbildes, das an einer Strahlungsbild-Speichertafel, die eine stimulierbare Phosphorschicht aufweist, gespeichert ist, wobei der stimulierbare Phosphor in einzelnen, durch Trennwandelemente abgeteilten Zellen enthalten ist, das das Stimulieren das Phosphors mit einem abtastend über die Oberfläche der Tafel geführten Erregerstrahl und das Ermitteln der stimulierten Phophoremission synchron mit der Abtastung des Erregerstrahls umfaßt.

2. Verfahren nach Anspruch 1, dadurch gekennzeichnet, daß die Tafel ein die Trennwandelemente sowie ein Bodenteilelement umfassendes Substrat aufweist.

3. Verfahren nach Anspruch 2, dadurch gekennzeichnet, daß das Bodenteilelement mit den Trennwandelementen Verbunden ist.

4. Verfahren nach einem der Ansprüche 1 bis 3, dadurch gekennzeichnet, daß das Verhältnis des Oberflächenbereichs der Zellen mit Bezug auf den Oberflächenbereich der oberen Stirnflächen der Trennwandelemente mindestens 50% beträgt.

5. Verfahren nach einem der Ansprüche 1 bis 4, dadurch gekennzeichnet, daß die Tiefe der Zellen von 30 µm bis 1000 µm beträgt.

6. Verfahren nach einem der Ansprüche 1 bis 5, dadurch gekennzeichnet, daß die Dicke der Trennwandelemente von 10 bis 300 µm beträgt.

7. Verfahren nach einem der Ansprüche 1 bis 6, dadurch gekennzeichnet, daß sich die obere Stirnfläche der Trennwandelemente und die Oberfläche der stimulierbaren Phosphorschicht auf derselben Ebene befinden.

8. Verfahren nach einem der Ansprüche 1 bis 6, dadurch gekennzeichnet, daß in der Tafel die obere Stirnfläche der Trennwand höher liegt als die Oberfläche der stimulierbaren Phosphorschicht.

9. Verfahren nach einem der Ansprüche 1 bis 8, dadurch gekennzeichnet, daß die Oberfläche der Phosphorschicht mit einem Schutzfilm versehen ist.

10. Verfahren nach einem der Ansprüche 1 bis 9, dadurch gekennzeichnet, daß der stimulierbare Phosphor eine mittlere Korngröße von 1 bis 30 µm hat.

11. Verfahren nach einem der Ansprüche 1 bis 10, dadurch gekennzeichnet, daß die Trennwandelemente für den Erregerstrahl absorptionsfähig oder reflektierend sind.

12. Verfahren nach einem der Ansprüche 1 bis 11, dadurch gekennzeichnet, daß der stimulierbare Phosphor in einem Bindemittel fein verteilt ist.

13. Verfahren nach einem der Ansprüche 1 bis 12, dadurch gekennzeichnet, daß die Zellen im Querschnitt im wesentlichen quadratisch sind.

14. Verfahren nach einem der Ansprüche 1 bis 12, dadurch gekennzeichnet, daß die Zellen im Querschnitt im wesentlichen kreisförmig sind.

15. Verfahren nach einem der Ansprüche 1 bis 12, dadurch gekennzeichnet, daß die Zellen im Querschnitt im wesentlichen sechseckig sind.

16. Verfahren nach einem der Ansprüche 1 bis 15, dadurch gekennzeichnet, daß die Wandelemente aus einem Metall gebildet sind.

**Revendications**

1. Procédé de reproduction d'une image par rayonnement, stockée sur un panneau de stockage pour image obtenue par rayonnement, comportant une couche de substance phosphorescente pouvant être stimulée, dans lequel la substance fluorescente pouvant être stimulée est contenue dans des cellules discrètes séparées par des éléments de cloison, qui comprend les étapes consistant à la substance phosphorescente stimuler avec un rayonnement d'excitation, qui balaye la surface du panneau, et à détecter l'émission de la substance phosphorescente stimulée en synchronisation avec le balayage du rayonnement d'excitation.

2. Procédé selon la revendication 1, dans lequel ledit panneau comporte un substrat comprenant lesdits éléments de cloison, et un élémente de partie de fond.

3. Procédé selon la revendication 2, dans lequel ledit élément de partie de fond est relié auxdits éléments de cloison.

4. Procédé selon l'une quelconque des revendications 1 à 3, dans lequel la proportion de la superficie des cellules par rapport à la superficie des dessus des éléments de cloison est d'au moins 50%.

5. Procédé selon l'une quelconque des revendications 1 à 4, dans lequel la profondeur des cellules est de 30 um à 1000 um.

6. Procédé selon l'une quelconque des revendications 1 à 5, dans lequel l'épaisseur des éléments de cloison est de 10 µm à 300 µm.

7. Procédé selon l'une quelconque des revendications 1 à 6, dans lequel la surface du dessus des cloisons et la surface de la couche de substance de phosphorescente stimulable sont au même niveau.

8. Procédé selon l'une quelconque des revendications 1 à 6, dans lequel, dans le panneau la surface du dessus des cloisons est plus élevée que la surface de la couche de substance phosphorescente stimulable.

9. Procédé selon l'une quelconque des revendications 1 à 8, dans lequel la surface de la couche de substance phosphorescente est munie d'un film protecteur.

10. Procédé selon l'une quelconque des revendications 1 à 9, dans lequel la substance phosphorescente stimulable présente une dimension granulomérique moyenne de 1 µm à 30 µm.

11. Procédé selon l'une quelconque des revendications 1 à 10, dans lequel les éléments de cloison sont absorbants ou réfléchissants vis-à-vis du rayonnement d'excitation.

12. Procédé selon l'une quelconque des revendications 1 à 11, dans lequel la substance phosphorescente stimulable est dispersée dans un liant.

13. Procédé selon l'une quelconque des revendications 1 à 12, dans lequel les cellules présentent une section transversale sensiblement carrée.

14. Procédé selon l'une quelconque des revendications 1 à 12, dans lequel les cellules présentant une section transversale sensiblement circulaire.

15. Procédé selon l'une quelconque des revendications 1 à 12, dans lequel les cellules présentent une section transversale sensiblement hexagonale.

16. Procédé selon l'une quelconque des revendications 1 à 15, dans lequel les éléments de cloison sont en métal.

FIG.1

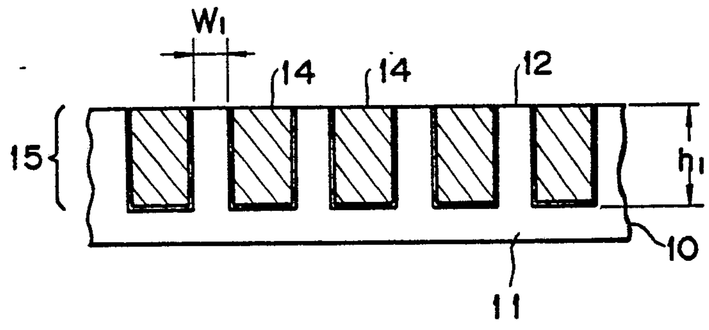


FIG.2

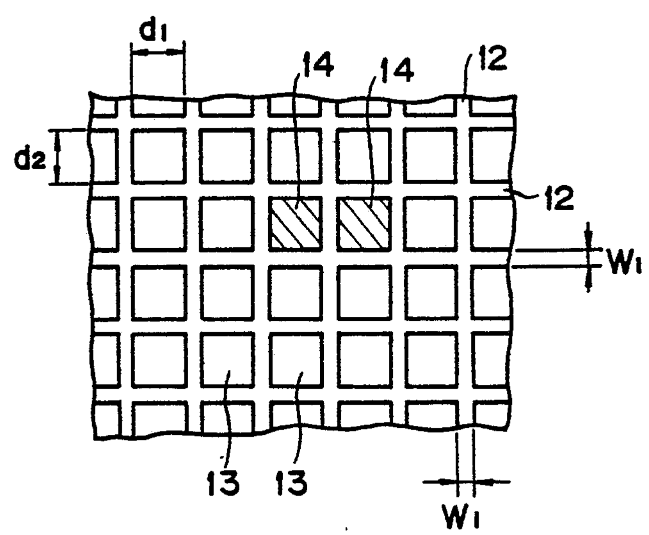

FIG.3

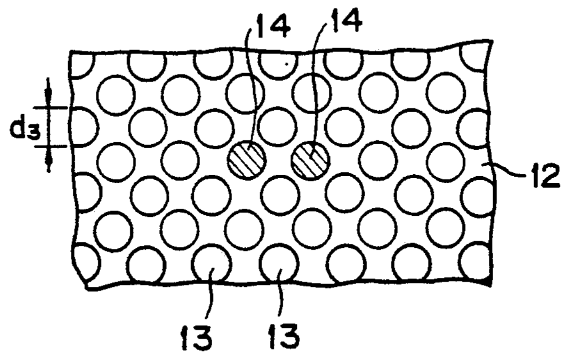


FIG.4

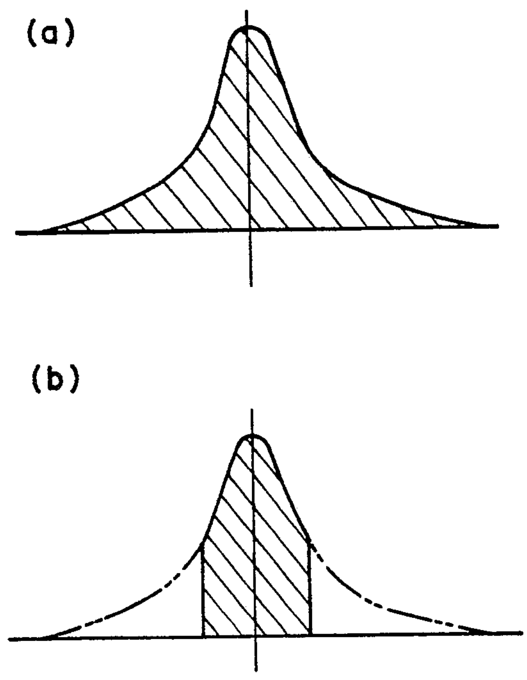

FIG.5

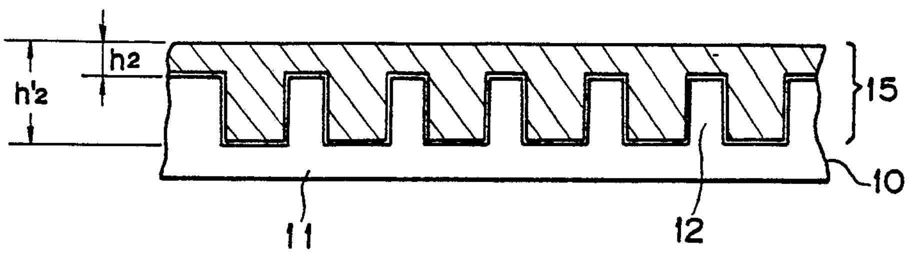


FIG.6

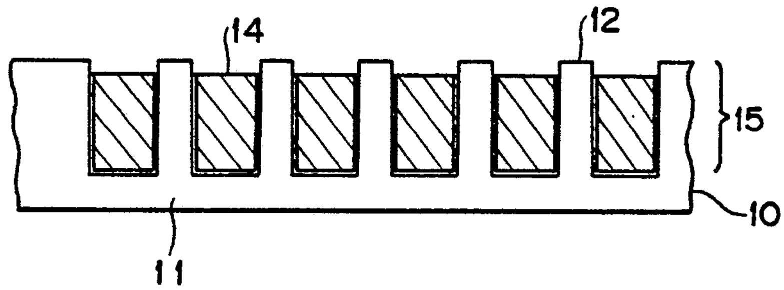


FIG.7

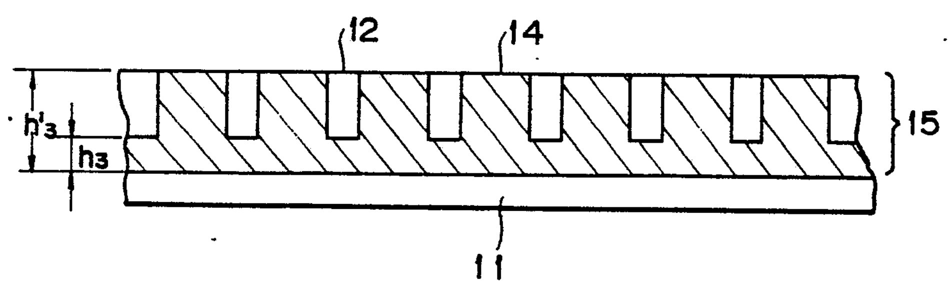

FIG.8

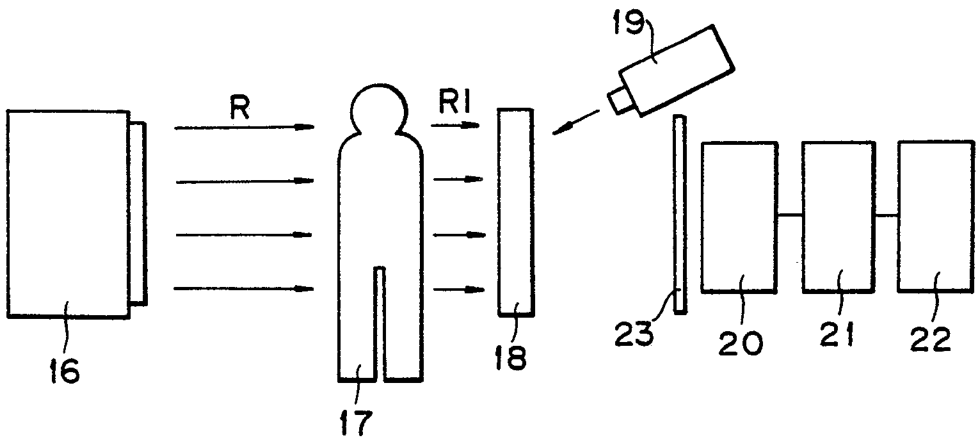


FIG.9

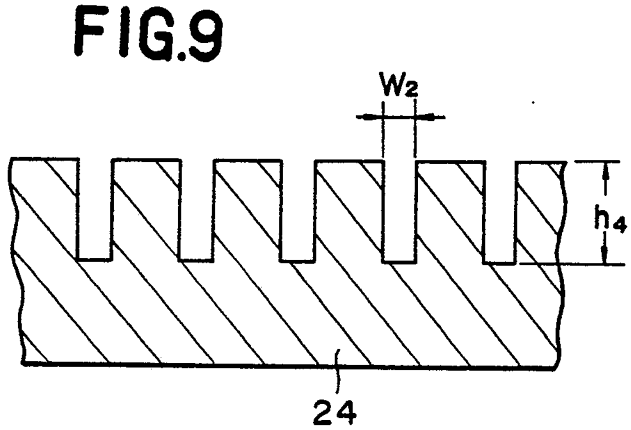


FIG.10

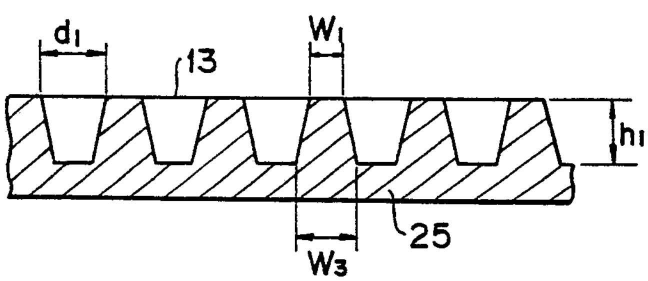

FIG.11

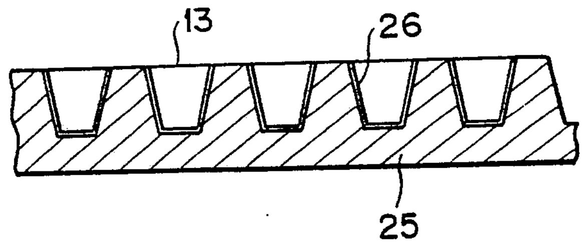


FIG.12

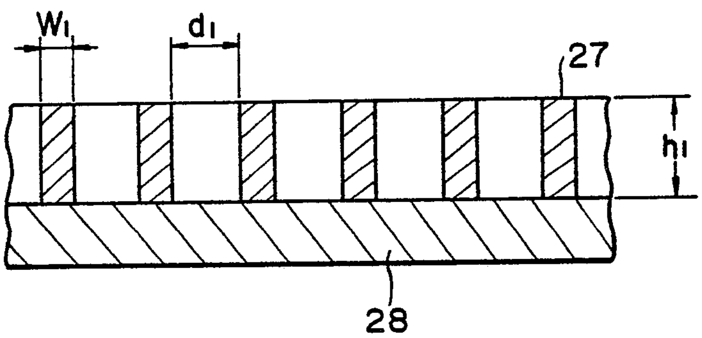


FIG.13